(19)

Europäisches
Patentamt
European
Patent Office
Office européen
des brevets

(11) **EP 3 413 175 A1**

(12) **EUROPEAN PATENT APPLICATION**
published in accordance with Art. 153(4) EPC

(43) Date of publication:
**12.12.2018 Bulletin 2018/50**

(21) Application number: **16888963.2**

(22) Date of filing: **25.05.2016**

(51) Int Cl.:
**G06F 3/041** (2006.01)

(86) International application number:
**PCT/CN2016/083353**

(87) International publication number:
**WO 2017/133142 (10.08.2017 Gazette 2017/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.02.2016 CN 201610080560**

(71) Applicant: **ZTE Corporation**
**Shenzhen, Guangdong 518057 (CN)**

(72) Inventor: **JIANG, Wei**
**Shenzhen**
**Guangdong 518057 (CN)**

(74) Representative: **Regimbeau**
**20, rue de Chazelles**
**75847 Paris Cedex 17 (FR)**

(54) **IMAGE GENERATION METHOD, TERMINAL, AND GRAPHICAL USER INTERFACE**

(57)     Disclosed are an image generation method, a terminal and a graphical user interface. The image generation method includes: obtaining information about a pressing operation acting on a pressure sensing touch screen, where the information about the pressing operation includes a pressure value of an effective pressing operation acting on the pressure sensing touch screen; determining the number of target image points to be generated according to the obtained pressure value; and generating the target image points on an image generation interface according to the number of the target image points to be generated. A transverse spread parameter of the target image points is $\sigma_1$ and a longitudinal spread parameter of the target image point is $\sigma_2$. Through the above-mentioned technical solution, an image is drawn by using the effective pressing operation received by the pressure sensing touch screen, thereby improving user experience in drawing the image by using the terminal.

Obtain information about a pressing operation acting on a pressure sensing touch screen — S10

Determine the number of target image points to be generated according to a obtained pressure value — S20

Generate the target image points on an image generation interface according to the number of target image points to be generated — S30

FIG. 1

EP 3 413 175 A1

**Description**

**TECHNICAL FIELD**

The present application relates to, but is not limited to, computer technology and, in particular, to an image generation method, a terminal and a graphical user interface.

**BACKGROUND**

With the advent of pressure sensing touch screens that are applied to terminals, a pressure touch control sensing method that is applied to pressure sensing touch screens has brought much unprecedented experience to users. At present, in most cases, an image is drawn by sensing the trajectory of components (including a user's finger, a touch control stylus and other external devices) acting on a touch screen of a terminal, and very few images are drawn by pressure touch control technology.

**SUMMARY**

The following is a summary of a subject matter described herein in detail. This Summary is not intended to limit the scope of the claims.

An embodiment of the present disclosure discloses an image generation method, a terminal and a graphical user interface based on a pressure sensing touch screen of a terminal, provides a method for drawing an image by using a pressing operation acting on a pressure sensing touch screen of the terminal, and solves the problem that the user has a poor interactive experience when drawing an image on the terminal.

An embodiment of the present disclosure provides an image generation method, including:

obtaining information about a pressing operation acting on a pressure sensing touch screen, where the information about the pressing operation includes a pressure value of an effective pressing operation acting on the pressure sensing touch screen;

determining a number of target image points to be generated according to the obtained pressure value; and

generating, according to the number of the target image points to be generated, the target image points on an image generation interface, where a transverse spread parameter of the target image points is $\sigma_1$ and a longitudinal spread parameter of the target image points is $\sigma_2$.

Another embodiment of the present disclosure provides a graphical user interface of a terminal. The terminal includes a pressure sensing touch screen and one or more processors for executing instructions to generate target image points according to obtained information about a pressing operation acting on the pressure sensing touch screen. The graphical user interface includes the image generation interface described in the image generation method.

The present application further provides a computer-readable storage medium storing computer-executable instructions. When executed, the computer-executable instructions perform the above-mentioned method.

Another embodiment of the present disclosure provides a terminal, including an obtaining module, a determining module and a processing module.

The obtaining module is configured to obtain information about a pressing operation acting on a pressure sensing touch screen. The information about the pressing operation includes a pressure value of an effective pressing operation acting on the pressure sensing touch screen and position information about the effective pressing operation acting on the pressure sensing touch screen.

The determining module is configured to determine the number of target image points to be generated according to the obtained pressure value.

The processing module is configured to generate the target image points on an image generation interface according to the number of target image points to be generated. The transverse spread parameter of the target image points is $\sigma_1$ and the longitudinal spread parameter of the target image points is $\sigma_2$.

By using the image generation method, the terminal and the graphical user interface provided by embodiments of the present disclosure, an image can be drawn through the effective pressing operation received by the pressure sensing touch screen, thereby improving the user's experience when drawing an image by using the terminal.

Other aspects can be understood after the accompanying drawings and detailed description are read and understood.

## BRIEF DESCRIPTION OF DRAWINGS

Accompanying drawings are used for providing a further understanding of the technical solution of the present application, and constitute a part of the specification. The accompanying drawings are used together with the embodiments of the present application to explain the technical solution of the present application, and do not constitute a limitation to the technical solution of the present application.

FIG. 1 is a flowchart of an image generation method according to an embodiment of the present disclosure; and

FIG. 2 is a schematic diagram of a terminal according to another embodiment of the present disclosure.

## DETAILED DESCRIPTION

Embodiments of the present disclosure will be set forth in detail below in conjunction with the accompanying drawings. It should be noted that, if not in collision, the embodiments described herein and the features thereof may be combined with each other.

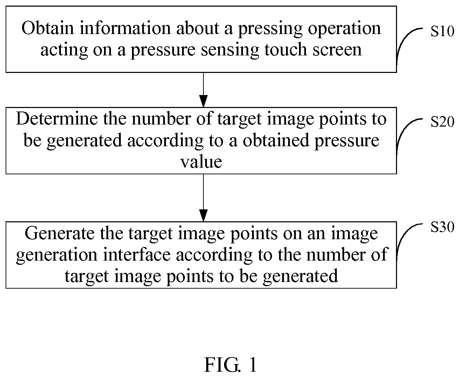

FIG. 1 is a flowchart of an image generation method of an embodiment of the present disclosure. As shown in FIG.1, the embodiment of the present disclosure includes the steps described below.

In S10, information about a pressing operation acting on a pressure sensing touch screen is obtained. The information about the pressing operation includes a pressure value of an effective pressing information acting on the pressure sensing touch screen.

In S20: the number of target image points to be generated is determined according to the obtained pressure value.

In S30: the target image points are generated on an image generation interface according to the number of target image points to be generated, and a transverse spread parameter of the target image points is $\sigma_1$ and a longitudinal spread parameter of the target image points is $\sigma_2$.

The transverse spread parameter $\sigma_1$ and the longitudinal spread parameter $\sigma_2$ can be set to the same value or different values.

In an exemplary embodiment, the process of obtaining the information about the pressing operation acting on the pressure sensing touch screen includes the following steps.

The pressing operation of the user is received. If the pressure value of the received pressing operation is detected to be greater than a preset pressure threshold, the pressing operation is identified as the effective pressing operation, and the pressure value of the effective pressing operation is recorded.

In an exemplary embodiment, the process of determining the number of target image points to be generated according to the obtained pressure value includes the following steps.

The number of target image points to be generated is calculated according to a pre-stored function; a dependent variable of the function is the number of target image points to be generated and an independent variable of the function is the obtained pressure value, and the function is:

$$N = (\text{int})(F*S).$$

N denotes the number of target image points to be generated, int denotes the algorithm of the function, F denotes the obtained pressure value, * denotes a multiplication operator, and S denotes the pressure sensitivity of the pressure sensing touch screen.

In an exemplary embodiment, the information about the pressing operation further includes the position information about the effective pressing operation acting on the pressure sensing touch screen, and the position information includes coordinates of the effective pressing operation acting on the pressure sensing touch screen.

In an exemplary embodiment, the steps of generating the target image points on the image generation interface according to the number of target image points to be generated include: the coordinates of the position information about the pressing operation is taken as a center point, and the target image points are generated according to at least one of the following distribution principles.

The randomly distributed target image points are generated according to a Gaussian distribution principle.

The target image points are generated according to a nearest neighbor point distribution principle.

The randomly and evenly distributed target image points are generated within a circular area with the center point as a center and a fixed radius according to a circular area distribution principle.

In order to introduce the technical solution of the present application more clearly, the above embodiments will be described in detail.

The information about the pressing operation acting on the pressure sensing touch screen is obtained in real time. The information includes a pressure value F of the pressing operation and coordinates (a, b) of the pressing operation acting on the pressure sensing touch screen. When the pressure value of the pressing operation indicated by the obtained information about the pressing operation is greater than the preset pressure threshold, the pressing operation is identified as an effective pressing operation, and an image drawing application program is started. Alternatively, according to a request of a user, an application program applying the image generation method is started, the pressure sensing touch screen displays an image drawing interface of the application program, and the information about the pressing operation acting on the pressure sensing touch screen is obtained. All the pressing operations acting on the pressure sensing touch screen are regarded as effective pressing operations. The terminal records the pressure value F of the pressing operation and the coordinates (a, b) of the pressing operation acting on the pressure sensing touch screen included in the pressing operation information. The number of target image points to be generated on the image generation interface or canvas is calculated based on the currently obtained pressure value F and the preset function $N = (int) (F*s)$. The number of target image points is proportional to the current pressure value F and is also proportional to the pressure sensitivity S of the pressure sensor of the pressure sensing touch screen of the terminal. For example, if the currently received pressure value is 15.5 N, the current pressure sensitivity is 0.4, then 15.5 * 0.4 = 6.2 is obtained by using the above function. Thus, according to the currently received information about the pressing operation, six target image points should be generated on the image interface. The coordinates of the position information about the pressing operation are determined as the center point according to the number N of the target image points calculated according to the function. N target image points are generated according to at least one of the following distribution principles.

The N target image points are randomly distributed and are generated according to the Gaussian distribution principle.

The N target image points are generated according to the nearest neighbor point distribution principle.

The N target image points are randomly and evenly distributed within a circular area with the center point as a center and a fixed radius, and are generated according to the circular area distribution principle.

One image generation or one pressure sensing drawing described in the embodiment of the present disclosure is finished by displaying the generated N target image points on the image generation interface or canvas of the image generation interface. A next pressing operation collection and calculation period is performed in this way. These steps are repeated, and when the request of the user is received, the drawing is saved or the image generation interface is exited.

The process of generating N target image points by using the Gaussian distribution principle is as follows: when one target image point is generated, a random point (a', b') substantially in line with the Gaussian distribution and with the coordinates (a, b) of the pressing operation acting on the pressure sensing touch screen as the mean value is generated by substituting random numbers u1, u2, v1, v2 randomly generated in a value range of (0, 1) into a formula 1:

$$a' = a + \sigma_1 * sqrt(-2.0 * (\log(u1) / \log(e))) * \cos(2 * pi * u2);$$

$$b' = b + \sigma_2 * sqrt(-2.0 * (\log(v1) / \log(e))) * \cos(2 * pi * v2);$$

Formula 1

sqrt denotes a square root operation function, * denotes the multiplication operator, and pi denotes a number $\pi$.

In an exemplary embodiment, in another embodiment of the present disclosure, the target image points can be generated according to the nearest neighbor point principle, that is, each generated target image point is closest to the coordinate (namely, the center point) of the current pressing operation acting on the pressure sensing touch screen, enhancing the continuity of the drawn image.

Optionally, in another embodiment of the present disclosure, randomly and evenly distributed target image points within a circular area with the center point as a center and a fixed radius may be generated according to a circular area distribution principle. The target image points which are evenly distributed in a range with a coordinate of a position of the effective pressing operation as the center point and a certain radius (namely, the target image points) can be designed, and a function, formula 2, is constructed as follows:

$$a' = a + u1$$

$$b' = b + v1 \qquad \text{Formula 2}$$

The distribution radius is set to r, and u1 and v1 are target points which are evenly distributed in a range of (-r, r). In the embodiment of the present disclosure, owing to the circular even distribution principle, the calculation amount of the terminal can be greatly reduced, which improves the operation efficiency of the terminal.

In the embodiment of the present disclosure, if the N calculated by the function N = (int) (F*S) is smaller than 1, the pressure sensitivity of the pressure sensing touch screen of the terminal is adjusted according to the request of the user. Alternatively, function N = (int) (F*S) is accumulated until the N is greater than or equal to 1. When the obtained pressure value is relatively small, that is, the force applied to the pressure sensing touch screen by the user when the user draws the image is small which causes the calculated N smaller than 1, the user request may be received to increase the pressure sensitivity S of the pressure sensor of the terminal; or according to the pressure accumulation algorithm, if the N calculated by the function N = (int) (F*S) is smaller than 1, the calculated N is accumulated. If N is smaller than 1, N is accumulated to be $N1 + N2 + ... + N_n$. When the accumulated N is greater than or equal to 1, one target image point is generated, and cached N values are cleared. The very slight pressures can be accumulated to form a drawing effect by using the method of the embodiment of the present disclosure, and on the basis of this method, drawing can be performed for a slight pressure, such as an effective pressing operation acting on the pressure sensing touch screen from a slight vibration of nature.

In an exemplary embodiment of the present disclosure, generating the target image points include the following steps: a distance between the generated target image point and the center point is configured according to a request of a user or a default setting. If the generated target image point is far away from the center point, the generated target image point may become noise, affecting the effect of the entire screen. In another embodiment of the present disclosure, in order to avoid this, the terminal may configure the distance L between the generated target image point and the center point according to a request of the user or a default setting. In one embodiment, the target image points with the distance L greater than the average of $\sigma_1$ and $\sigma_2$ or twice the average value are filtered, that is, the filtered target image points are not displayed on the canvas.

In an exemplary embodiment of the present disclosure, before the step of obtaining the information about the pressing operation acting on the pressure sensing touch screen, the method further includes: the minimum and maximum values of the pressure value of the effective pressing operation are configured according to the request of the user or the default setting. If the obtained pressure value of the pressing operation received by the pressure sensing touch screen is smaller than the minimum value, the pressing operation is not identified as an effective pressing operation. If the obtained pressure value of the pressing operation is greater than the maximum value, the target image points are generated according to the preset maximum value and the function N = (int) (F*S). For example, if the preset maximum value of the pressure value is 300 N, and the obtained pressure value is greater than 300 N, the pressure value of 300 N will be sent to perform the function. Optionally, when the pressure value of the pressing operation exceeds the maximum value, a picture of "screen fragmentation" may be displayed on the screen of a mobile terminal to remind the user that the pressure value of the pressing operation is too large, thereby reducing the risk of screen fragmentation caused by a too large pressure value from a pressing operation and protecting the user's apparatus to some extent.

In an alternative embodiment of the present disclosure, generating the target image points on the image generation interface according to the number of target image points to be generated include the following steps: a hue, purity and lightness of each of the target image points are configured according to a request of a user, or , the hue, purity and lightness of one target image point among the target image points are randomly configured to be the same hue, purity or lightness or a linear gradient hue, purity or lightness according to a default setting. Before the image is drawn, according to the request of the user, the color of the target image point may be preset to a single hue or a gradient hue, or be adjusted after receiving a request of a user during the drawing process; or, according to the default setting, the hue, purity, and lightness of the target image point are randomly configured.

In another alternative embodiment of the present disclosure, randomly configuring the hue, purity and lightness of the target image point according to a default setting further include the following steps: a display pixel purity parameter of the terminal is configured. If at least two target image points are distributed in one pixel, the target image points with randomly configured hues are generated according to the configured pixel purity parameter. For a clear description of the present embodiment, a detailed description is given. In the embodiment of the present disclosure, a distribution curve such as the Gaussian distribution principle is used to make the target image points in the embodiment randomly distributed on the image generation interface. In this random distribution manner, it is very likely that a large number of random points are in the same pixel. For the case where at least two target image points are distributed in the same pixel, in the embodiment of the present disclosure, the at least two target image points are generated and displayed at the same location, and a hue attribute parameter and a purity attribute parameter are configured for the pixel of the image generation interface. For a clear description of the technical solution of the embodiment, a detailed description is provided below.

When the background color of the image generation interface (namely, the canvas) and the color of the target image point (namely, the brush) are configured, 10 levels of purity data are generated according to the configured colors of the canvas and the brush. When 1 to 5 target image points are at the same pixel, display is performed with the lowest purity (1-level purity). When 6 to 10 target image points are at the same pixel, display is performed with a 2-level purity. Similarly, when 41 to 45 target image points are at the same pixel, it corresponds to a 9-level purity, and when 46 or more target image points are at the same pixel, it corresponds to the highest purity (10-level purity). For example, if the canvas is configured with a white background and the brush is configured to be bright red, a very pale pink is displayed when 1-level purity is employed, and a purely bright red is displayed when 10-level purity is employed. The criterion for judging whether two target image points are distributed at the same pixel is that the coordinates of the two target image points are the same. For example, the coordinates of the two target image points are (56.23, 98.76) and (56.98, 98.21) respectively. Because the coordinates of the pixel points can only be integers, the two calculated coordinates are both (56, 98) and it can be determined that the two target image points are distributed at the same pixel. According to the technical solution of the embodiment of the present disclosure, the color of the image may be changed according to the pressure value of the pressing operation received by the pressure sensor, thereby improving the drawing experience of the user.

In an alternative embodiment of the present disclosure, the image generation interface includes an image drawing interface of the image drawing application program installed at the terminal or a display interface of the terminal. The display interface of the terminal includes: a screen locking interface or a starting interface of the terminal. Briefly, in the embodiment, the pressure sensing drawing function, namely, the image generation method, may be started through an application program, or through a drawing application program integrated on the screen locking interface or the starting interface. That is, instead of starting the application program that implements the image generation method, the user may perform a pressing operation on the starting interface or the screen locking interface, and the terminal receives the effective pressing operation, generates the image and save the image in the terminal. The technical solution of the embodiment provides more ways of starting the pressure sensing drawing function so that the interface for drawing may not even need to be displayed on the screen of the terminal for the user. When the screen of the terminal is dark, the user may perform an effective pressing operation on the screen, and an image can be generated when the terminal obtains the effective operation received by the pressure sensing touch screen.

The present application also provides a graphical user interface of a terminal. The terminal includes a pressure sensing touch screen and one or more processors for executing instructions to generate target image points according to obtained information about a pressing operation acting on a pressure sensing touch screen. The graphical user interface includes the image generation interface described in the image generation method.

The embodiments of the present disclosure further provide a computer-readable storage medium storing computer-executable instructions. When executed, the computer-executable instructions implement the above-mentioned method.

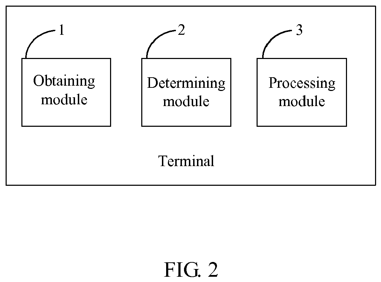

FIG. 2 is a schematic diagram of the terminal of another embodiment of the present disclosure. As shown in FIG. 2, the terminal in the embodiment of the present disclosure includes: an obtaining module 1, a determining module 2, and a processing module 3.

The obtaining module 1 is configured to obtain information about a pressing operation acting on a pressure sensing touch screen. The information about the pressing operation includes a pressure value of an effective pressing operation acting on the pressure sensing touch screen and position information about the effective pressing operation acting on the pressure sensing touch screen.

The determining module 2 is configured to determine the number of target image points to be generated according to the obtained pressure value.

The processing module 3 is configured to generate the target image points on an image generation interface according to the number of target image points to be generated. The transverse spread parameter of the target image points is $\sigma_1$ and the longitudinal spread parameter of the target image points is $\sigma_2$.

In the embodiment of the present disclosure, optionally, the determining module includes: an obtaining unit, a detecting unit, and a recording unit.

The obtaining unit is configured to obtain the information about the pressing operation acting on the pressure sensing touch screen.

The detecting unit is configured to identify the pressing operation as an effective pressing operation when detecting that the pressure value of the pressing operation acting on the pressure sensing touch screen is greater than the preset pressure threshold.

The recording unit is configured to record the pressure value of the effective pressing operation.

In an exemplary embodiment, the determining module includes a storage unit and a calculating unit.

The storage unit is configured to store a function in advance. A dependent variable of the function is the number of target image points to be generated, and an independent variable of the function is the obtained pressure value. The function is:

$$N = (\text{int}) (F*S).$$

N denotes the number of target image points to be generated, int denotes the algorithm of the function, F denotes the obtained pressure value, * denotes a multiplication operator, and S denotes the pressure sensitivity of the pressure sensing touch screen.

The calculating unit is configured to calculate the number of target image points to be generated according to the function pre-stored by the storage unit.

In an exemplary embodiment, the calculating unit is configured to, if the N is smaller than 1, adjust the pressure sensitivity of the pressure sensing touch screen of the terminal according to a request of a user.

Alternatively, the calculating unit is configured to accumulate the function $N = (\text{int}) (F*S)$ until the N is greater than or equal to 1.

In an exemplary embodiment, the information about the pressing operation further includes the position information about the effective pressing operation acting on the pressure sensing touch screen.

The processing module 3 is configured to:

set the coordinates of the position information about the pressing operation as the center point; and

generate the target image points according to at least one of the following distribution principles.

The randomly distributed target image points are generated according to a Gaussian distribution principle.

The target image points are generated according to a nearest neighbor point distribution principle.

The randomly and evenly distributed target image points are generated within a circular area with the center point as a center and a fixed radius according to a circular area distribution principle.

In an alternative embodiment of the disclosure, the processing module 3 is configured to configure a distance between the generated target image point and the center point according to a request of a user or a default setting.

In an exemplary embodiment, the processing module 3 is further configured to configure a minimum value and a maximum value of a pressure value of the effective pressing operation according to a request of a user or a default setting.

In an exemplary embodiment, the processing module 3 is configured to configure a hue, purity and lightness of the target image point according to a request of a user, or, randomly configure a hue, purity and lightness of one target image point among the target image points to be the same hue, purity or lightness or a gradient hue, purity or lightness according to a default setting.

In an exemplary embodiment, when randomly configuring the hue, purity and brightness of one target image point among the target image points according to a default setting, the processing module 3 is configured to:

configure the display pixel purity parameter of the terminal; and

if at least two of the target image points are distributed at the same pixel, generate the target image points whose hues are randomly configured according to the configured pixel purity.

In another alternative embodiment of the present disclosure, the image generation interface includes an image drawing interface of the image drawing application program installed at the terminal or a display interface of the terminal. The display interface of the terminal includes: a screen locking interface or a starting interface of the terminal.

An image can be drawn by using the image generation method, the terminal and the graphical user interface provided by embodiments of the present disclosure through the effective pressing operation received by the pressure sensing touch screen, thereby improving the user's experience when the user draws an image by using the terminal.

It is to be understood by those skilled in the art that all or part of the processes described in the above methods may be implemented by related hardware instructed through computer programs. The computer programs may be stored in a computer-readable storage medium, such as a read only memory (ROM), a magnetic disk, an optical disk, etc. Correspondingly, each module in the above-mentioned embodiments may be implemented in the form of hardware or in the form of a software function module. This application is not limited to any specific combination of hardware and software.

The above are only exemplary embodiments of the present disclosure. Of course, the present application may also have various other embodiments. It will be understood by those skilled in the art that various changes and modifications may be made herein without departing from the spirit and substance of the present application and within the scope of the present application as defined by the appended claims.

It is to be understood by those skilled in the art that all or part of the processes described in the above methods may be implemented by related hardware (such as a processor) instructed through computer programs. The computer programs may be stored in a computer-readable storage medium, such as a read only memory (ROM), a magnetic disk, an optical disk, etc. Optionally, all or part of the steps of the above embodiments may also be implemented by using one or more integrated circuits. Correspondingly, each of the modules/units in the above embodiments may be implemented in the form of hardware, for example, the corresponding functions of the modules/units may be implemented through an integrated circuit; or in the form of a software function module, for example, the corresponding functions of the modules/units may be implemented through executing programs /instructions stored in a memory by a processor. Embodiments of this application are not limited to any specific combination of hardware and software.

**INDUSTRIAL APPLICATION**

With the image generation method, the terminal and the graphical user interface provided by embodiments of the present disclosure, an image can be drawn by using the effective pressing operation received by the pressure sensing touch screen, thereby improving the user's experience when the user draws an image by using the terminal.

**Claims**

1. An image generation method, applied to a terminal, comprising:

   obtaining information about a pressing operation acting on a pressure sensing touch screen, wherein the information about the pressing operation comprises a pressure value of an effective pressing operation acting on the pressure sensing touch screen;
   determining, according to the obtained pressure value, a number of target image points to be generated; and
   generating, according to the number of the target image points to be generated, the target image points on an image generation interface, wherein a transverse spread parameter of the target image points is $\sigma_1$ and a longitudinal spread parameter of the target image points is $\sigma_2$.

2. The method of claim 1, wherein the step of determining the number of the target image points to be generated according to the obtained pressure value comprises:

   calculating, according to a pre-stored function, the number of the target image points to be generated, wherein a dependent variable of the function is the number of the target image points to be generated, an independent variable of the function is the obtained pressure value, and the function is:

$$N = (\text{int}) \, (F*S),$$

   wherein N denotes the number of the target image points to be generated, int denotes algorithm of the function, F denotes the obtained pressure value, * denotes a multiplication operator, and S denotes pressure sensitivity of the pressure sensing touch screen.

3. The method of claim 2, wherein the step of calculating the number of the target image points to be generated according to a pre-stored function comprises:

   if the N is less than 1, adjusting the pressure sensitivity of the pressure sensing touch screen of the terminal according to a request of a user; or
   accumulating the function N = (int) (F * S) until the N is greater than or equal to 1.

4. The method of claim 1, wherein the information about the pressing operation further comprises: position information about the effective pressing operation acting on the pressure sensing touch screen.

5. The method of claim 4, wherein the step of generating the target image points on the image generation interface according to the number of the target image points to be generated comprises:

taking coordinates of the position information about the pressing operation as a center point; and
generating, according to at least one of the following distribution principles, the target image points,

generating, according to a Gaussian distribution principle, the target image points, which are randomly distributed;
generating, according to a nearest neighbor point distribution principle, the target image points; and
generating, according to a circular area distribution principle, the target image points, which are randomly and evenly distributed within a circular area with the center point as a center and a fixed radius.

6. The method of claim 5, wherein the step of generating the target image points comprises:

configuring a distance between each of the target image points and the center point according to a request of a user or a default setting.

7. The method of claim 1, before the step of obtaining the information about the pressing operation acting on the pressure sensing touch screen, further comprising:

configuring a minimum value and a maximum value of the obtained pressure value of the effective pressing operation according to a request of a user or a default setting.

8. The method of claim 1, wherein the step of generating, according to the number of the target image points to be generated, the target image points on the image generation interface comprises:

configuring a hue, purity and lightness of each of the target image points according to a request of a user; or randomly configuring, according to a default setting, the hue, purity and lightness of one target image point among the target image points to be a same hue, purity or lightness or a gradient hue, purity or lightness.

9. The method of 8, wherein the step of randomly configuring, according to the default setting, the hue, purity and lightness of each of the target image points comprises:

configuring a display pixel purity parameter of the terminal; and
if at least two of the target image points are distributed at a same pixel, generating, according to the configured pixel purity, target image points whose hues are randomly configured.

10. The method of claim 1, wherein the image generation interface comprises an image drawing interface of an image drawing application program installed at the terminal or a display interface of the terminal, wherein the display interface of the terminal comprises: a screen locking interface or a starting interface of the terminal.

11. A graphical user interface of a terminal, wherein the terminal comprises a pressure sensing touch screen and one or more processors for executing instructions to generate target image points according to obtained information about a pressing operation acting on the pressure sensing touch screen, and the graphical user interface comprises the image generation interface described in the image generation method of any of claims 1 to 10.

12. A terminal, comprising: an obtaining module, a determining module and a processing module, wherein,
the obtaining module is configured to obtain information about a pressing operation acting on a pressure sensing touch screen, wherein the information about the pressing operation comprises a pressure value of an effective pressing operation acting on the pressure sensing touch screen;
the determining module is configured to determine, according to the obtained pressure value, a number of target image points to be generated; and
the processing module is configured to generate the target image points on an image generation interface according to the number of the target image points to be generated, wherein a transverse spread parameter of the target image points is $\sigma_1$ and a longitudinal spread parameter of the target image points is $\sigma_2$.

13. The terminal of claim 12, wherein the determining module comprises a storage unit and a calculating unit, wherein the storage unit is configured to pre-store a function, wherein a dependent variable of the function is the number of the target image points to be generated, and an independent variable of the function is the obtained pressure value, and the function is:

$$N = (int) (F*S);$$

wherein N denotes the number of the target image points to be generated, int denotes algorithm of the function, F denotes the obtained pressure value, * denotes a multiplication operator, and S denotes pressure sensitivity of the pressure sensing touch screen; and
the calculating unit is configured to calculate, according to the function pre-stored in the storage unit, the number of the target image points to be generated.

14. The terminal of claim 13, wherein the calculating unit is configured to:

if the N is less than 1, adjust the pressure sensitivity of the pressure sensing touch screen
of the terminal according to a request of a user; or
accumulate the function N = (int) (F * S) until the N is greater than or equal to 1.

15. The terminal of claim 12 or 13, wherein the information about the pressing operation further comprises: position information about the effective pressing operation acting on the pressure sensing touch screen;
the processing module is configured to:

take coordinates of the position information about the pressing operation as a center point; and
generate, according to at least one of the following distribution principles, the target image points,

generate, according to a Gaussian distribution principle, the target image points, which are randomly distributed;
generate, according to a nearest neighbor point distribution principle, the target image points; and
generate, according to a circular area distribution principle, the target image points, which are randomly and evenly distributed within a circular area with the center point as a center and a fixed radius.

16. The terminal of claim 12, wherein the processing module is configured to:

configure a hue, purity and lightness of each of the target image points according to a request of a user; or
randomly configure, according to a default setting, the hue, purity, and lightness of one target image point among the target image points to be a same hue, purity or lightness or a gradient hue, purity or lightness.

17. The terminal of claim 16, wherein when randomly configuring the hue, purity and lightness of the one target image point among the target image points according to the default setting, the processing module is configured to:

configure a display pixel purity parameter of the terminal; and
if at least two of the target image points are distributed at a same pixel, generate, according to the configured pixel purity, the target image points whose hues are randomly configured.

Obtain information about a pressing operation acting on a pressure sensing touch screen — S10

Determine the number of target image points to be generated according to a obtained pressure value — S20

Generate the target image points on an image generation interface according to the number of target image points to be generated — S30

FIG. 1

FIG. 2

# INTERNATIONAL SEARCH REPORT

| | International application No. |
|---|---|
| | **PCT/CN2016/083353** |

## A.  CLASSIFICATION OF SUBJECT MATTER

G06F 3/041 (2006.01) i

According to International Patent Classification (IPC) or to both national classification and IPC

## B.  FIELDS SEARCHED

Minimum documentation searched (classification system followed by classification symbols)

G06F; H04N

Documentation searched other than minimum documentation to the extent that such documents are included in the fields searched

Electronic data base consulted during the international search (name of data base and, where practicable, search terms used)

CNABS, CNTXT, CNKI: image, pattern, generate, draw, screen, pressure, point, number, sensitivity, colour

VEN: image, picture, pattern, generate, creat, write, draw, screen, press, point, number, amount, quantity, sensitivity, chroma, color

## C.  DOCUMENTS CONSIDERED TO BE RELEVANT

| Category* | Citation of document, with indication, where appropriate, of the relevant passages | Relevant to claim No. |
|---|---|---|
| X | CN 102520849 A (BEIJING SHENGSHI XUANHE INFORMATION TECHNOLOGY CO., LTD.), 27 June 2012 (27.06.2012), description, paragraphs [0060]-[0081] | 1, 4-8, 10-12, 15, 16 |
| A | CN 102520810 A (AU OPTRONICS CORP.), 27 June 2012 (27.06.2012), the whole document | 1-17 |
| A | CN 101118469 A (SONY CORPORATION), 06 February 2008 (06.02.2008), the whole document | 1-17 |
| A | US 2014168077 A1 (BARNESANDNOBLE COM LLC), 19 June 2014 (19.06.2014), the whole document | 1-17 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 October 2016 (18.10.2016) | **04 November 2016 (04.11.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **FEI, Yan** Telephone No.: (86-10) **62411532** |

Form PCT/ISA/210 (second sheet) (July 2009)

## INTERNATIONAL SEARCH REPORT
### Information on patent family members

| | International application No. |
|---|---|
| | PCT/CN2016/083353 |

| Patent Documents referred in the Report | Publication Date | Patent Family | Publication Date |
|---|---|---|---|
| CN 102520849 A | 27 June 2012 | CN 102520849 B | 07 August 2013 |
| CN 102520810 A | 27 June 2012 | US 2013100070 A1 | 25 April 2013 |
| | | TW 201317839 A | 01 May 2013 |
| CN 101118469 A | 06 February 2008 | US 2008024459 A1 | 31 January 2008 |
| | | CN 100587657 C | 03 February 2010 |
| | | JP 2008033739 A | 14 February 2008 |
| | | US 7952566 B2 | 31 May 2011 |
| US 2014168077 A1 | 19 June 2014 | US 9030430 B2 | 12 May 2015 |

Form PCT/ISA/210 (patent family annex) (July 2009)